(19) Europäisches Patentamt
European Patent Office
Office européen des brevets

(11) **EP 3 159 868 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(51) Int Cl.:
***G08G 5/00*** *(2006.01)*    ***G08G 5/04*** *(2006.01)*

(21) Anmeldenummer: **16002194.5**

(22) Anmeldetag: **12.10.2016**

(54) **VERFAHREN ZUM BESTIMMEN EINER AUSWEICHEMPFEHLUNG FÜR EIN FAHRZEUG**

METHOD FOR PRODUCING A DODGE RECOMMENDATION FOR A VEHICLE

PROCÉDÉ DE DÉTERMINATION D'UNE SUGGESTION DE MANŒUVRE D'ÉVITEMENT POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2015 DE 102015013324**

(43) Veröffentlichungstag der Anmeldung:
**26.04.2017 Patentblatt 2017/17**

(73) Patentinhaber: **HENSOLDT Sensors GmbH 82024 Taufkirchen (DE)**

(72) Erfinder: **MAYER, Horst 89171 Illerkirchberg (DE)**

(74) Vertreter: **LifeTech IP Spies & Behrndt Patentanwälte PartG mbB Elsenheimerstraße 47a 80687 München (DE)**

(56) Entgegenhaltungen:
**US-A1- 2006 058 931     US-A1- 2011 160 950 US-A1- 2012 209 457**

**Beschreibung**

Die Erfindung betrifft ein Verfahren zum Bestimmen einer Ausweichempfehlung für ein erstes Fahrzeug bei der Begegnung mit einem zweiten, nicht-kooperativen Fahrzeug, wobei sich das zweite Fahrzeug mit einer konstanten Geschwindigkeit bewegt.

Mit der Zunahme des Fahrzeugverkehrs auf den verschiedenen Verkehrswegen zu Land, See und Luft vergrößert sich auch immer mehr die Gefahr einer Kollision zwischen zwei Fahrzeugen. Um Kollisionen und gefährliche Situationen zu vermeiden ist es wichtig, Kenntnis darüber zu haben, ob eine Kreuzung der Fahrwege oder ein zu niedriger Passierabstand vorliegt. In beiden Fällen ist ein Ausweichmanöver mit einer entsprechenden Richtungsänderung notwendig.

Aktuelle Systeme nutzen verschiedene Verfahren, um Kollisionen zu vermeiden. In der zivilen Luftfahrt wird derzeit an Bord eines Luftfahrzeuges vorwiegend das Traffic Alert and Collision Avoidance System (TCAS) eingesetzt. Dies stellt eine Implementierung des Kollisionswarnsystems Airborne Collision Avoidance System (ACAS) dar, das von der Internationalen Zivilluftfahrtorganisation (ICAO) definiert wurde. Bei diesem System werden Mode S als auch Mode A/C fähige Transponder verwendet, um eine Lagebild der Umgebung zu erstellen. Das System errechnet aus den empfangenen Daten (Richtung, Entfernung, Annäherungsgeschwindigkeit, Höhe und Steig-/Sinkrate), ob, und wenn ja, wann mit einer Kollision mit einem Flugzeug zu rechnen ist. Das System gibt in Abhängigkeit von den empfangenen Daten des möglichen Kollisionsgegners eine TA (Traffic Advisory = Verkehrshinweis) oder eine RA (Resolution Advisory = Ausweichempfehlung) aus. Diese Empfehlung basiert auf der Berechnung des Punktes der dichtesten Annäherung (CPA = Closest Point of Approach), der Dauer TTG (Time To Go), bis dieser Punkt erreicht wird, und ob überhaupt eine Abstandsverletzung vorliegen würde.

TCAS generiert seine Ausweichempfehlungen jedoch rein vertikal, basierend auf bekannten Daten von Flugzeugen mit entsprechenden Transpondern.

US 8831906 B1 beschreibt ein Verfahren zur Bestimmung des CPA, wobei eine Fusion von zwei unterschiedlichen CPA-Berechnungsmethoden zur Verbesserung der CPA-Genauigkeit genutzt wird.

In der militärischen Luftfahrt speziell bei Drohnen werden teilweise andere Systeme eingesetzt.

EP 2674723 A2 beschreibt beispielsweise ein System zur Verhinderung von Kollisionen von UAVs mit anderen Luftfahrzeugen, das basierend auf der CPA Position unter Berücksichtigung etwaiger Mindestabstände eine mögliche Ausweichempfehlung gibt. US 20120209457 offenbart ein Verfahren zum Bestimmen einer Ausweichempfehlung für ein erstes Fahrzeug bei der Begegnung mit einem zweiten, nicht-kooperativen Fahrzeug, mit den Merkmalen des Oberbegriffs des Anspruchs 1. Problematisch ist, dass speziell im militärischen Bereich keine TCAS-Ausrüstungsverpflichtung besteht: Leichte Drohnen, Kampf- oder Transportflugzeuge aber auch zivile Kleinst- oder Leichtflugzeuge z.B. in Deutschland unter 5700kg Abfluggewicht können ohne ein solches System betrieben werden. Somit kann für ein Ausweichmanöver nicht auf Transponderdaten etablierter Systeme zurückgegriffen werden. Berechnungen von Manövern, die eine Kollision von Fahrzeugen vermeiden, benötigen oft eine sehr hohe Sensorperformance/-auflösung sowie eine hohe Verarbeitungsgeschwindigkeit, da eine Vielzahl an Eingangsparametern benötigt werden. Dies macht bisherige Verfahren aufwendig und teuer.

Aufgabe der Erfindung ist es, ein Verfahren zum vereinfachten und kostengünstigen Bestimmen einer Ausweichempfehlung für die Begegnung zweier Fahrzeuge zu bestimmen, das auch ohne Transponderdaten verwendet werden kann.

Diese Aufgabe wird mit dem Verfahren gemäß Patentanspruch 1 gelöst. Eine Steuereinrichtung zur Implementierung des Verfahrens sowie vorteilhafte Ausführungen der Erfindung sind Gegenstand von Unteransprüchen.

Das Verfahren zum Bestimmen einer Ausweichempfehlung für ein erstes Fahrzeug bei der Begegnung mit einem zweiten, nicht-kooperativen Fahrzeug, wobei sich das zweite Fahrzeug mit konstanter Geschwindigkeit bewegt, weist folgende Schritte auf:

1. Messen der Annäherungsrate $\dot{r}_0$ zwischen den beiden Fahrzeugen mittels eines Sensors an Bord des ersten Fahrzeugs,

2. Durchführen eines Messmanövers des ersten Fahrzeugs, wobei eine Richtungsänderung des ersten Fahrzeugs erfolgt,

3. Messen der Annäherungsrate $\dot{r}_1$ nach Durchführung der Richtungsänderung zwischen den beiden Fahrzeugen mittels eines Sensors an Bord des ersten Fahrzeugs,

4. Vergleichen der Annäherungsraten $\dot{r}_0$ und $\dot{r}_1$ mittels einer elektronischen Verarbeitungseinheit an Bord des ersten Fahrzeugs, sowie

5. Ausgeben einer Empfehlung zur Durchführung eines Ausweichmanövers für das erste Fahrzeug.

Dabei werden die folgenden Fälle unterschieden:

Im Falle $\dot{r}_1 > \dot{r}_0$ soll das Ausweichmanöver in dieselbe Drehrichtung wie beim Messmanöver erfolgen. Wenn z.B. beim Messmanöver ein seitliches Ausweichen nach links erfolgte, so soll das Ausweichmanöver ebenfalls nach links erfolgen.

Im Falle $\dot{r}_1 < \dot{r}_0$ soll das Ausweichmanöver entgegen der Drehrichtung des Messmanövers erfolgen. Wenn z.B. beim Messmanöver ein seitliches Ausweichen nach links erfolgte, so soll das Ausweichmanöver nun nach rechts erfolgen. Soweit $\dot{r}_1, \dot{r}_0$ im Wesentlichen identisch (im Rahmen der Mess- und Verarbeitungsgenauigkeit der beteiligten Sensoren und elektronischen Komponenten) sind, wird zunächst kein Ausweichmanöver ausgegeben, sondern es wird eine Anweisung zur Ausführung eines weiteren Messmanöver ausgegeben, und zwar in die entgegengesetzte Drehrichtung und mit einem größeren Betrag der Richtungsänderung als beim vorhergehenden Messmanöver. Daran anschließend werden die Schritte 3 - 5, ggf. mehrmals, wiederholt, bis sich eine Ausweichempfehlung ergibt.

Dabei ist die Annäherungsrate $\dot{r}(t)$ negativ, wenn sich die beiden Fahrzeuge annähern, wird am Ort der dichtesten Annäherung null, und ist positiv wenn sich die beiden Fahrzeuge voneinander entfernen. Mathematisch betrachtet stellt die Annäherungsrate die Radialgeschwindigkeit zwischen den beiden Fahrzeugen dar.

Wenn im Text von der Geschwindigkeit gesprochen wird, ist diese als vektorielle Größe zu verstehen, d.h. gekennzeichnet durch deren Richtung der Bewegung und deren Betrag (Wegstrecke/Zeit)

Zur Bestimmung der Annäherungsraten $\dot{r}$ wird vorteilhaft ein Radar-, Sonar- oder Laser-Sensor verwendet, wobei auch mehrere Sensoren des gleichen Typs oder eine Kombination der Sensoren zur Erhöhung der Genauigkeit verwendet werden können. Die Bestimmung und Verarbeitung des Verfahrens erfolgt vorzugsweise in Echtzeit, so dass eine Ausweichempfehlung nach Ausführung des Messmanövers und erneutem Messen der Annäherungsraten $\dot{r}$ sofort verfügbar ist und somit dem Fahrzeugführer unverzüglich, also in Echtzeit, ausgegeben werden kann.

Die Ausführung und Richtungsänderung des Messmanövers kann dabei in eine beliebige Fahrtrichtung erfolgen, wobei der Betrag der Geschwindigkeit bevorzugt beibehalten wird. Abhängig vom Einsatzzweck und Fahrzeugtyp werden bevorzugt seitliche Fahrtrichtungsänderungen vorgenommen z. B. kleine Kursabweichungen nach links oder rechts für Seefahrzeuge oder beliebige Kursabweichungen/-änderungen für Luftfahrzeuge oder Unterseeboote. Stellt man sich das Flugzeug oder Unterseeboot im Mittelpunkt einer Kugel vor, so definiert jeder Punkt auf der in Fahrtrichtung vor dem Fahrzeug liegenden Hemisphäre der Kugel eine mögliche Richtung für das Messmanöver. Besonders vorteilhaft für Flugzeuge oder Unterseeboote sind seitliche Richtungsänderungen, da nur eine sehr geringe und präzise Kursabweichung im Vergleich zum freigegeben Luftraum / ursprünglichen Kurs erfolgt.

Um die Anzahl und Notwendigkeit von Ausweichmanövern zu begrenzen, ist es möglich, die Initiierung des Verfahrens mit vordefinierten Schwellwerten zu korrelieren. Dabei wird das Verfahren erst nach Unterschreiten eines definierten Schwellwer-tes gestartet, um unnötige Kursänderungen zu vermeiden. Schwellwerte können beispielsweise aus nachfolgenden Größen abgeleitet werden, wobei zumindest einer von diesen oder eine Kombination eingesetzt wird:

- Passierabstand, dem sogenannten Closest Approach (CA) entsprechend dem Abstand am zu erwartenden Ort der dichtesten Annäherung dem sogenannten CPA zweier Fahrzeuge, wobei der CPA aus CA und der zugehörigen Peilung definiert wird (z.B. erst wenn der Passierabstand von Luftfahrzeugen kleiner als bspw. 3km ist, wird eine Ausführung initiiert),
- Zeitdauer bis zur dichtesten Annäherung, der sogenannten Time to Closest-Point of Approach (TCPA), beispielsweise wird ein Schwellwert von 60 Sekunden festgelegt, erst wenn dieser unterschritten wird, startet das Verfahren,
- Kollisionsrisiko (d.h. die Wahrscheinlichkeit, dass eine Kollision mit einem anderen Fahrzeug eintreten könnte).

Das Kollisionsrisiko, kann auf verschiedene, an sich bekannte Arten unter Verwendung definierter Parameter bestimmt werden, wobei in einer bevorzugten Variante das Kollisionsrisiko aus der Kombination von TCPA und CPA bestimmt wird. Zudem kann die absolute Distanz zur Bestimmung des Kollisionsrisikos verwendet werden, wobei diese allein oder in Kombination mit TCPA, CPA benutzt wird.

Zudem kann die Entscheidung, ob das erfindungsgemäße Verfahren zu initiieren ist, auch eine Berücksichtigung der Art des zweiten Fahrzeugs beinhalten z.B. dass nur gleichartige Fahrzeuge berücksichtigt werden, die denselben Raum nutzen z.B. Schiffe, oder Flugzeuge.

Um zusätzliche Informationen für eine Entscheidung über eine Initiierung des Verfahrens zu gewinnen, können auch Systeme wie ADS-B, AIS, TCAS oder auch andere Formen von Transponder oder Receiver Systemen genutzt werden, wobei eines oder mehrere der genannten Systeme zur Anwendung kommen können.

Mit diesen Transpondersignalen kann ein Lagebild der Umgebung, d.h. Identifikation der Fahrzeuge in der Umgebung sowie Ermittlung der Fahrzeuge die ein Risiko darstellen, erstellt werden. Somit kann auch hier die Ausführung des Verfahrens auf Fahrzeuge mit einer Risikoeinstufung begrenzt werden.

Kleine Messentfernungen zu einem zweiten Fahrzeug können die Zuverlässigkeit der Ausweichempfehlung beim Vergleich der Annäherungsraten $\dot{r}_0$ und $\dot{r}_1$ reduzieren, deswegen kann zur Erhöhung der Zuverlässigkeit ein Korrekturwert eingeführt werden, der die spezielle Geometrie des Messmanövers berücksichtigt.

Die Ausgabe der Ausweichempfehlung kann in verschiedenen Varianten erfolgen, wobei hier zwischen der Möglichkeit der visuellen und akustischen Ausgabe unterschieden wird, wobei in einer besonders vorteilhaften Ausprägung des Verfahrens eine Kombination aus visueller und akustischer Ausgabe implementiert wird.

Die Umsetzung des erfindungsgemäßen Verfahrens an Bord eines Fahrzeugs kann mittels einer elektronischen Steuereinrichtung erfolgen. Die Steuereinrichtung ist derart eingerichtet, dass diese

- Eingangssignale von einem oder mehreren Sensoren an Bord des mit der Steuereinheit ausgestatteten ersten Fahrzeugs z.B. ein Flugzeug zur Bestimmung der aktuellen Annäherungsrate $\dot{r}_0$ zwischen den beiden Fahrzeugen abfragen, empfangen und speichern kann,
- eine Anweisung an den Autopiloten und / oder den Fahrzeugführer des ersten Fahrzeugs zur Ausführung eines Messmanövers des ersten Fahrzeugs ausgeben kann,
- eine Feststellung der vollständigen Ausführung des Messmanövers anhand der Bewegungsinformationen / Positionsdaten des ersten Fahrzeugs erzeugen kann, und danach ein erneutes Abfragen der Annäherungsrate $\dot{r}_1$ zwischen den beiden Fahrzeugen und den Empfang der Sensordaten vornehmen kann,
- einen Vergleich der Annäherungsraten $\dot{r}_0$, $\dot{r}_1$ vornehmen kann,
- eine Ausweichempfehlung an einen Autopiloten und / oder einen Fahrzeugführer des ersten Fahrzeugs zur Durchführung eines Ausweichmanövers ausgeben kann, wobei bei $\dot{r}_1 > \dot{r}_0$ das Ausweichmanöver in dieselbe Drehrichtung wie beim Messmanöver erfolgen soll, bei $\dot{r}_1 < \dot{r}_0$ das Ausweichmanöver entgegen der Drehrichtung des Messmanövers erfolgen soll, und
- wenn die beiden Größen $\dot{r}_1$, $\dot{r}_0$ im Wesentlichen gleich (d.h. im Rahmen der zugrundeliegenden Mess- und Verarbeitungsgenauigkeit) sind, eine Anweisung zur Ausführung eines weiteren Messmanöver in die entgegengesetzte Drehrichtung mit einem größeren Betrag der Richtungsänderung als beim vorhergehenden Messmanöver erzeugen soll.

Dabei enthält die Steuereinheit elektronische Komponenten wie beispielsweise eine CPU, einen Speicher, Software und Eingabe- / Ausgabeeinheiten zum Empfang und zur Weitergabe von Signalen / Informationen und gegebenenfalls weitere, dem Fachmann bekannte Mittel, zur Implementierung des erfindungsgemäßen Verfahrens. Die Steuereinheit kann derart eingerichtet sein, dass eine Verarbeitung der Eingangssignale der Sensoren und somit die Ausführung des Verfahrens erst nach Vorliegen einer Unterschreitung eines Schwellwertes oder auf Grund des Vorliegens eines Kollisionsrisikos erfolgen soll. Dies stellt eine vorteilhafte Ausführung dar, um unnötige Messmanöver und Kursänderungen zu vermeiden.

Zusätzliche Informationen für eine Entscheidung über eine Initiierung des Verfahrens können, in einer weiteren besonders vorteilhaften Ausführung, durch eine Schnittstelle zu einem ADS-B, AIS, TCAS oder zu anderen Formen von Transponder oder Receiver Systemen gewonnen werden. Z.B. kann aus der Fluginformationen des ADS-B Transponder eines anderen Luftfahrzeugs, dessen Route und somit Kollisionsgefahr bestimmt werden.

Zudem ist es besonders vorteilhaft, wenn die Steuereinrichtung eine Echtzeit-Funktionalität aufweist.

In einer weiteren Ausführungsform erfolgt die Weitergabe der Ausweichempfehlung an einen Fahrzeugführer über eine Ausgabeeinrichtung, wobei die Steuereinheit in dieser Variante eine Schnittstelle / Verbindung zu dieser Ausgabeeinrichtung aufweist. Dabei kann die Ausweichempfehlung auf der Ausgabeeinrichtung visuell und / oder akustisch an den Fahrzeugführer erfolgen.

Die Erfindung wird anhand konkreter Ausführungsbeispiele unter Bezugnahme auf Fig. 1 bis 4 näher erläutert:

Es zeigen:

Fig. 1    eine Konstellation von zwei Fahrzeugen im 3D-Raum in Vektordarstellung,
Fig. 2    die Veränderung der Ausgangssituation bei Durchführung des erfindungsgemäßen Messmanövers in 2D-Darstellung,
Fig. 3    die Positionsänderungen der Fahrzeuge bei der Wiederholung des erfindungsgemäßen Messmanövers,
Fig. 4    Darstellung des Zusammenwirkens der Steuereinheit mit Komponenten des Fahrzeugs bei Anwendung des erfindungsgemäßen Verfahrens.

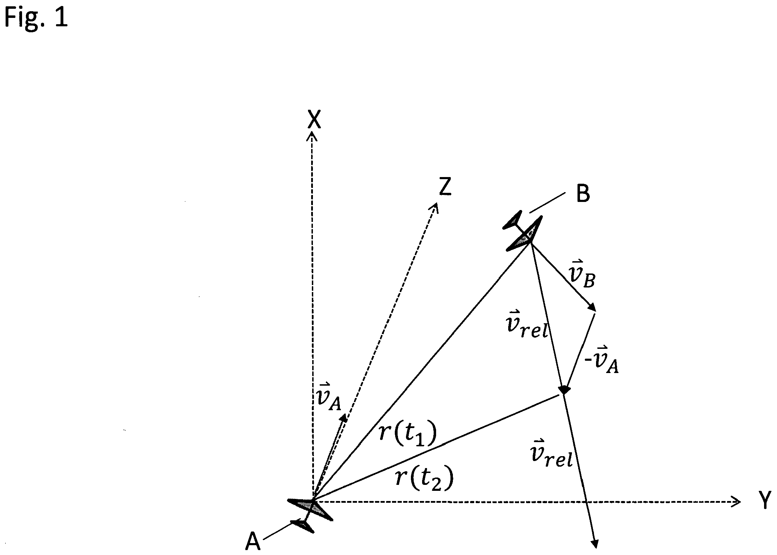

Das erfindungsgemäße Verfahren nutzt zur Bestimmung der Ausweichempfehlung allein die Messwerte der Annäherungsrate $\dot{r}$. Dies ist die zeitliche Änderung des Abstands $r$ zwischen dem ersten und zweiten Fahrzeug. Fig. 1 zeigt eine mögliche Konstellation der beiden Fahrzeuge betrachtet im fahrzeugfesten Koordinatensystem des ersten Fahrzeugs A. Die Fahrzeuge (hier bspw. Luftfahrzeuge) A und B bewegen sich mit konstanter, geradliniger Geschwindigkeit.

Das Fahrzeug A ist im Koordinatenursprung platziert. Die Bewegung des Fahrzeugs B erfolgt mit der relativen

Geschwindigkeit $\vec{v}_{rel}$. Die Geschwindigkeit $\vec{v}_{rel}$ entspricht der Differenzgeschwindigkeit von $\vec{v}_B$ (Fahrzeug B) und $\vec{v}_A$. (Fahrzeug A).

Die zeitliche Änderung des Abstands $r(t)$ zwischen ersten und zweiten Fahrzeug ergibt die Annäherungsrate $\dot{r}(t)$. Die Annäherungsrate $\dot{r}(t)$ ist negativ, wenn sich die beiden Fahrzeuge annähern, wird am Ort der dichtesten Annäherung null, und ist positiv wenn sich die beiden Fahrzeuge voneinander entfernen.

Im Folgenden wird die Ausführung des Verfahrens an einem Beispiel im 3D-Raum mit zwei sich begegnenden Luftfahrzeugen erläutert. Man sieht das erste Luft-Fahrzeug A, nachfolgend mit Ownship A bezeichnet, und das zweite Luft-Fahrzeug B, nachfolgend Intruder B genannt. Weitere Anwendungen im 3D-Raum sind der Einsatz in Fahrzeugen unter Wasser z.B. in U-Booten, sowie in der Raumfahrt. Es ist jedoch auch im 2D-Raum anwendbar, wie z.B. auf Seewegen Seewegen.

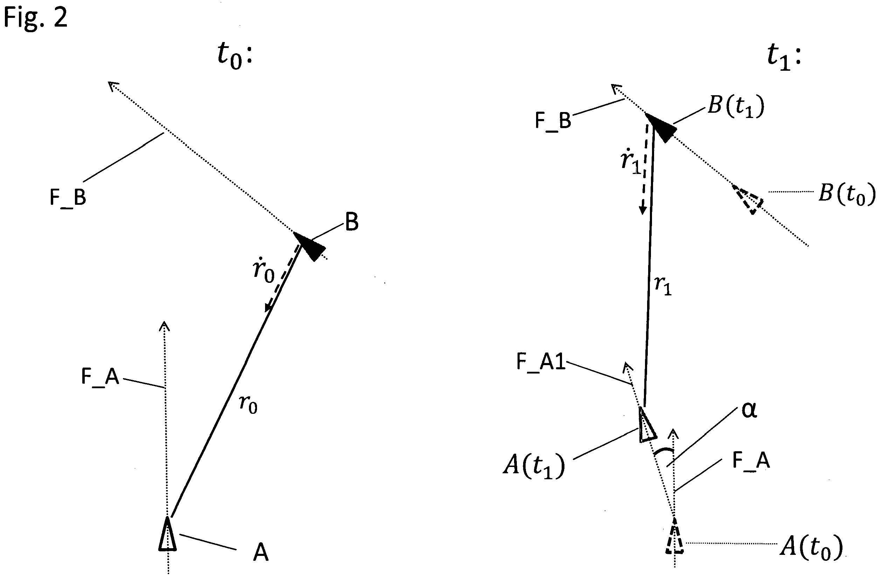

In Fig. 2 sind die Positionen des Ownship A und des Intruders B zu den Zeitpunkten $t_0$ in der Ausgangslage und $t_1$ nach Durchführung des Messmanövers dargestellt, sowie die zugehörigen Flugpfade F_A, F_B, F_A1 und Abstände der Fahrzeuge $r_0$, $r_1$ zu den Zeitpunkten $t_0$ und $t_1$. Zum besseren Verständnis ist eine 2-dimensionale Darstellung gewählt, analog gilt dies für die Anwendung im 3D-Raum.

Vor der Ausführung des Messmanövers wird die Annäherungsrate $\dot{r}_0$ zum Zeitpunkt $t_0$ gemessen, dies erfolgt vorteilhaft durch einen an Bord befindlichen Sensor des Ownship A, dies kann z.B. ein Laser-, Radar- oder Sonarsensor sein. Anschließend führt das Ownship A ein Messmanöver durch, dies entspricht der Änderung des Flugpfads F_A auf den neuen Flugpfad F_A1, der Flugpfad F_B des Intruders B bleibt dabei unverändert. Dabei entspricht die Flugpfadänderung einem Winkel $\alpha$ wie in Fig. 2 zum Zeitpunkt $t_1$ dargestellt ist.

Nach Abschluss des Messmanövers, zum Zeitpunkt $t_1$, nun auf dem neuen Flugpfad F_A1, wird erneut die Annäherungsrate $\dot{r}_1$ gemessen. Danach werden die Annäherungsraten $\dot{r}_1$, $\dot{r}_0$ vorteilhaft mittels einer elektronischen Verarbeitungseinheit, die sich an Bord des Ownship A befindet, in einer besonders vorteilhaften Ausführung in Echtzeit verglichen. Auf der Basis dieses Vergleichs von $\dot{r}_0$, $\dot{r}_1$ wird dem Ownship A unverzüglich eine Empfehlung zur Durchführung eines Ausweichmanövers ausgegeben.

Im Fall von $\dot{r}_1 > \dot{r}_0$ soll das Ausweichmanöver in dieselbe Drehrichtung wie beim Messmanöver erfolgen. Im Fall von $\dot{r}_1 < \dot{r}_0$ soll das Ausweichmanöver entgegen der Drehrichtung des Messmanövers erfolgen. Soweit die beiden Größen im Wesentlichen gleich sind, d.h. $\dot{r}_1 \cong \dot{r}_0$, erfolgt ein weiteres Messmanöver, nun jedoch in die entgegengesetzte Drehrichtung mit einem größeren Betrag der Richtungsänderung als beim vorhergehenden Messmanöver. Zum Beispiel könnte die Richtungsänderung beim erneuten Messmanöver doppelt so groß sein wie beim vorangegangenen. Vorteilhaft bleibt der Betrag der Geschwindigkeit des Fahrzeugs A vor, während und nach dem Messmanöver unverändert. Es sind jedoch auch Ausführungen möglich, bei denen sich der Betrag der Geschwindigkeit, z.B. während des Messmanövers, ändert, ohne dass sich die Genauigkeit des Verfahrens wesentlich vermindern würde. Weiter unten wird eine vorteilhafte Variante der Erfindung erläutert, mit der der durch die Geschwindigkeitsänderung implizierte Fehler kompensiert werden kann.

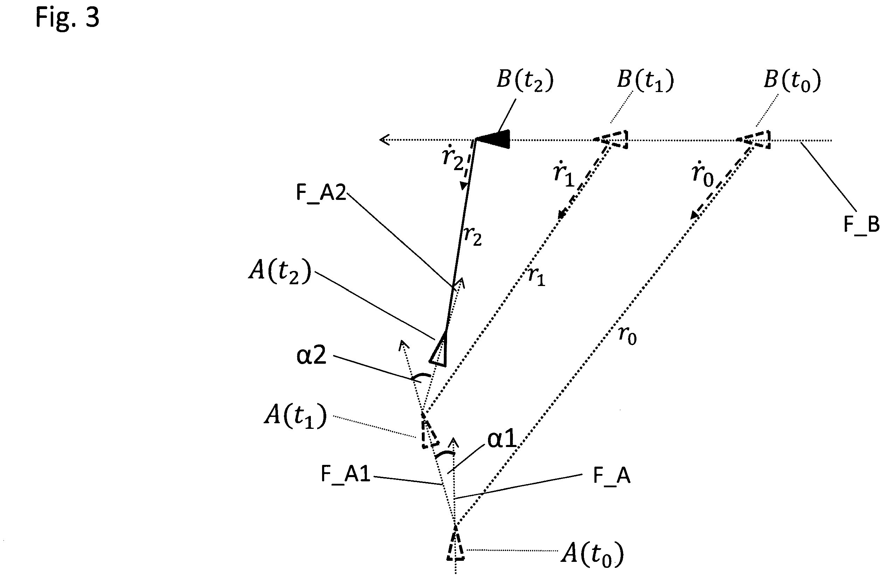

Fig. 3 stellt eine Situation, bei der $\dot{r}_1 \cong \dot{r}_0$ ist, in vereinfachter Darstellung dar. Dabei sind die Positionen des Ownship A und des Intruders B zu den Zeitpunkten $t_0$, $t_1$ und $t_2$ dargestellt, wobei sich der Intruder B dabei unverändert auf seinem bisherigen Flugpfad F_B bewegt hat. Dagegen sieht man die Änderungen des Flugpfads F_A, F_A1 und F_A2 des Ownship A, wobei zuerst eine Änderung unter einem Drehwinkel $\alpha 1$ erfolgt und anschließend auf Grund des Vergleichs der Annäherungsraten $\dot{r}_1$, $\dot{r}_0$ eine zweites Messmanöver zur Bestimmung von $\dot{r}_2$ in die entgegengesetzte Drehrichtung mit dem Winkel $\alpha 2$ erfolgte. Der Drehwinkel $\alpha 2$ beträgt dabei vorteilhaft mindestens zweimal $\alpha 1$. Wenn das erste Messmanöver beispielsweise eine Richtungsänderung mit einem Drehwinkel von 4° aufwies, ist es vorteilhaft einen Winkel von mindestens -8° zu wählen. Somit wäre ein zweites Messmanöver beispielsweise mit einem Winkel $\alpha 2$ von -10° zum aktuellen Flugpfad F_A1 durchzuführen, wodurch der neue Flugpfad F_A2 eingenommen wird. Sollte auch im Anschluss an dieses Messmanöver kein Ergebnis (d.h. ein eindeutiger Unterschied der Größen $\dot{r}_1$, $\dot{r}_2$) erreicht werden, ist eine Wiederholung mit einem noch größeren Winkel notwendig.

Lediglich in Einzelfällen kann es möglich sein, dass die Anwendung des Verfahrens auch bei mehreren Iterationen ohne ein Ergebnis beendet werden muss. Darunter fallen folgende Umstände bzw. Verletzungen der Eingangsbedingungen:

- Der Intruder B hat ein Manöver durchgeführt; dies könnte eine Richtungsänderung oder eine Geschwindigkeitsänderung sein;
- Auf Grund der Sensorgenauigkeit kann keine signifikante Veränderung der Annäherungsraten festgestellt werden (z.B. da die Entfernung zwischen den Fahrzeugen zu groß ist oder die Sensorauflösung zur gering ist);
- Der Sensor weist einen systematischen Fehler auf (z.B. defekter Sensor).

Dies sind Einzelfälle, die die praktische Anwendbarkeit des erfindungsgemäßen Verfahrens nicht einschränken.

Um eine weitere Verbesserung des Verfahrens zu erreichen, ist es möglich einen Korrekturterm für den Vergleich der Annäherungsraten $\dot{r}_1$, $\dot{r}_0$ zu nutzen, der die Zuverlässigkeit der Ausweichempfehlung erhöht. Damit wird der Einfluss der speziellen Geometrie des Zusammentreffens der beiden Fahrzeuge auf die Änderung der Annäherungsrate berücksichtigt. Beispielsweise kleine Messentfernungen zu einem zweiten Fahrzeug können die Zuverlässigkeit der Ausweichempfehlung beim Vergleich der Annäherungsraten $\dot{r}_0$ und $\dot{r}_1$ reduzieren, deswegen kann zur Erhöhung der Zuverlässigkeit ein Korrekturwert eingeführt werden, der die spezielle Geometrie des Messmanövers berücksichtigt.

Der Einfluss der Geometrie des Zusammentreffens auf die Annäherungsraten ist im Wesentlichen von der Entfernung r(t) der Fahrzeuge A, B bestimmt, die Einfluss auf die Bestimmung der zeitlichen Änderung $\ddot{r}_0 = \ddot{r}(t_0)$ der Annäherungsrate hat.

Ein brauchbarer Wert für den Korrekturterm kann z.B. mit der folgenden Formel (1) bestimmt werden.

$$C_{Geometrie} \approx \ddot{r}_0 \times (t_1 - t_0) \qquad\qquad (1)$$

Dabei ist $\ddot{r}_0$ die zeitliche Änderung der Annäherungsrate zum Zeitpunkt $t_0$, also zu einem Zeitpunkt vor dem Messmanöver, an dem auch $\dot{r}_0$ gemessen wird. Dabei kann $\ddot{r}_0$ von einem geeigneten Sensor-System direkt bestimmt werden. Alternativ kann $\ddot{r}_0$ aber auch durch zeitnahe Wiederholung der Messung der Annäherungsrate gemäß Formel (2) bestimmt werden.

$$\ddot{r}_0 = \frac{\dot{r}_0 - \dot{r}_w}{t_0 - t_w} \qquad\qquad (2)$$

Dabei ist $t_w$ ein Zeitpunkt kurz vor dem Zeitpunkt $t_0$ und $\dot{r}_w$ der zum Zeitpunkt $t_w$ gemessene Wert der Annäherungsrate. Mit diesem Korrekturwert, als weiterer Summand, ergeben sich dann die folgenden Kriterien für die Ausweichmanöver:

- $\dot{r}_1 > \dot{r}_0 + C_{Geometrie}$: Ausweichmanöver in dieselbe Drehrichtung wie beim Messmanöver
- $\dot{r}_1 < \dot{r}_0 + C_{Geometrie}$: Ausweichmanöver in die entgegengesetzte Drehrichtung wie beim Messmanöver
- $|\dot{r}_1 - \dot{r}_0| < C_{Geometrie}$ Weiteres Messmanöver durchführen.

Verändert sich der Betrag der Geschwindigkeit des Fahrzeugs A beim Messmanöver, kann diese Veränderung berücksichtigt werden, um das Ergebnis des Messmanövers zu verbessern. Die Geschwindigkeitsänderung des ersten Fahrzeugs ist mit nachfolgender Formel 3 definiert:

$$\Delta v_A = |\vec{v}_A(t_1)| - |\vec{v}_A(t_0)|$$

In Kurzschreibweise

$$\Delta v_A = |\vec{v}_{A,1}| - |\vec{v}_{A,0}| \qquad\qquad (3)$$

Dabei ist $|\vec{v}_A(t_1)|$ (oder kurz: $|\vec{v}_{A,1}|$) der Betrag Geschwindigkeit zum Zeitpunkt $t_1$ (d.h. nach Durchführung des Messmanövers zum Zeitpunkt der Messung von $\dot{r}_1$) und $|\vec{v}_A(t_0)|$ (oder kurz: $|\vec{v}_{A,0}|$) der Betrag der Geschwindigkeit zum Zeitpunkt $t_0$ (d.h. in der Ausgangslage vor dem Manöver zum Zeitpunkt der Messung von $\dot{r}_0$).

Ausgehend von der Geschwindigkeitsänderung wird diese in der Art eines Korrekturwerts verwendet. Es werden dabei zwei Fälle unterschieden. Im ersten Fall verringert sich die Geschwindigkeit des ersten Fahrzeugs A, d.h. $\Delta v_A < 0$. Für Fall 1 kann folgende Ausweichempfehlungen gegeben werden

Wenn $\dot{r}_1 > \dot{r}_0 - \Delta v_0$ soll das Ausweichmanöver in dieselbe Drehrichtung wie beim Messmanöver erfolgen. Wenn z. B. beim Messmanöver ein seitliches Ausweichen nach links erfolgte, so soll das Ausweichmanöver ebenfalls nach links erfolgen.

Wenn $\dot{r}_1 < \dot{r}_0$ soll das Ausweichmanöver entgegen der Drehrichtung des Messmanövers erfolgen. Wenn z.B. beim Messmanöver ein seitliches Ausweichen nach links erfolgte, so soll das Ausweichmanöver nun nach rechts erfolgen. Wenn $0 < \dot{r}_1 - \dot{r}_0 < - \Delta v_0$ soll ein weiteres Messmanöver in die entgegengesetzte Drehrichtung mit einem größeren Betrag der Richtungsänderung als beim vorhergehenden Messmanöver durchgeführt werden.

Im zweiten Fall erhöht sich die Geschwindigkeit des ersten Fahrzeugs A, d.h. $\Delta v_0 > 0$, somit ergibt sich für Fall 2 folgende Ausweichempfehlung:

Wenn $\dot{r}_1 > \dot{r}_0$ soll das Ausweichmanöver in dieselbe Drehrichtung wie beim Messmanöver erfolgen. Wenn z.B. beim Messmanöver ein seitliches Ausweichen nach links erfolgte, so soll das Ausweichmanöver ebenfalls nach links erfolgen.

Wenn $\dot{r}_1 < \dot{r}_0 - \Delta v_0$ soll das Ausweichmanöver entgegen der Drehrichtung des Messmanövers erfolgen. Wenn z.B. beim Messmanöver ein seitliches Ausweichen nach links erfolgte, so soll das Ausweichmanöver nun nach rechts erfolgen.

Wenn $0 > \dot{r}_1 - \dot{r}_0 > -\Delta v_0$ soll ein weiteres Messmanöver in die entgegengesetzte Drehrichtung mit einem größeren Betrag der Richtungsänderung als beim vorhergehenden Messmanöver durchgeführt werden.

Um das Verfahren nicht in jeder Situation ausführen zu müssen, wenn sich zwei Fahrzeuge in der Nähe befinden, kann das Verfahren an bestimmte Schwellwerte gekoppelt werden, die nach Unterschreiten eines definierten Wertes eine Ausführung des Verfahrens bedingen.

Dazu können unterschiedliche Größen benutzt werden, die eine Verfahrensinitiierung bewirken können. Dabei wird beispielsweise der Passierabstand, der den Abstand zweier Flugzeuge am Ort der dichtesten Annäherung (CPA) definiert, festgelegt, der bei einer Kreuzung der Flugpfade nicht unterschritten werden sollte. Dieser könnte beispielsweise 5km betragen. Wird nun der vorgegebene Abstandsschwellwert unterschritten, dann wird das erfindungsgemäße Verfahren ausgelöst.

Zusätzlich oder allein kann die Zeitdauer bis zur dichtesten Annäherung, dem sogenannten Time to Closest Point of Approach (TCPA), d.h. die Zeit bis der CPA erreicht ist, als Auslösekriterium verwendet werden. Z.B. gemäß dem vorher genannten Beispiel tritt dieser Fall erst in 10 min ein, somit macht eine Ausführung zu diesem Zeitpunkt noch keinen Sinn, da sich noch viele Änderungen der Situation einstellen könnten. Sinnvoll könnte das Verfahren beispielsweise erst innerhalb einer Zeitdauer von 2 min vor dem möglichen Eintritt aktiv ausgeführt werden.

Eine weitere Alternative für ein Auslösekriterium stellt das Kollisionsrisiko dar, das zum Beispiel aus der Kombination von TCPA und CPA bestimmt wird. Erst ab einem bestimmten Wert des Kollisionsrisikos wird das erfindungsgemäße Verfahren gestartet. Dies verhindert Manöver in Situationen in denen z.B. kein Zusammentreffen wahrscheinlich erscheint oder die Fahrzeuge auf parallelen Flugpfaden oder Fahrwegen unterwegs sind.

Es ist auch möglich, die Art des Intruders als ein Kriterium bei der Entscheidung zur Auslösung des Verfahrens zu berücksichtigen. Für ein Linienflugzeug in Reiseflughöhe ist beispielsweise ein Schiff keine Bedrohung und somit wird in diesem Fall auch kein Ausweichmanöver benötigt.

Für die Informationsgewinnung, um einen Schwellwert oder ein Kollisionsrisiko bestimmen zu können, können Transponder / Receiver verwendet und eingesetzt werden oder auch andere interne oder externe Informationsquellen. Beispiele für bekannte Transponder Systeme sind AIS (Schifffahrt), ADS-B und TCAS (beide Luftfahrt).

Ein besonderer Vorteil des erfindungsgemäßen Verfahrens ist die Verwendung nur eines Eingangsparameters der Annäherungsrate $\dot{r}$. Somit kann das Verfahren meist auf schon existierende Systeme des Fahrzeugs wie z.B. auf ein Radarsystem zurückgreifen, das die notwendigen Informationen schnell und robust liefert. Es werden keine Winkelinformationen wie Azimut, Elevation oder die horizontale Winkeländerung $\omega$ benötigt, die jeweils nur mit vergleichsweise hohem Messaufwand ermittelt werden können.

So erfordert eine Messung der Winkelrate $\omega$ eine sehr hohe Genauigkeit des Messsensors (was die Größe, Gewicht und Kosten des verwendeten Sensors erhöhen würde). Zudem erfolgt beim erfindungsgemäßen Verfahren die Messung der entsprechenden Eingangsparameter direkt im 3D-Raum. Es erfordert keinerlei Transformationen in den 2D-Raum, die einen mehrstufigen Berechnungsansatz benötigen würden, und eignet sich besonders gut, um in Echtzeit ausgeführt zu werden.

Zudem erlaubt das Verfahren die Ausführung des Messmanövers, bei bevorzugter Beibehaltung der Geschwindigkeit, in eine beliebige Richtung. Wobei diese Richtung zu einem Zielpunkt auf einer gedachten Halbkugel vor dem Fahrzeug führen kann. Stellt man sich beispielsweise das Flugzeug im Mittelpunkt einer Kugel vor, so definiert jeder Punkt auf der in Fahrtrichtung vor dem Fahrzeug liegenden Halbkugel der Kugel eine mögliche Richtung für das Messmanöver. Bei Land-/Seefahrzeugen reduziert sich diese Freiheit auf einen entsprechenden Halbkreis vor dem Fahrzeug.

Die Umsetzung des erfindungsgemäßen Verfahrens an Bord eines Fahrzeugs kann mittels einer elektronischen Steuereinrichtung erfolgen.

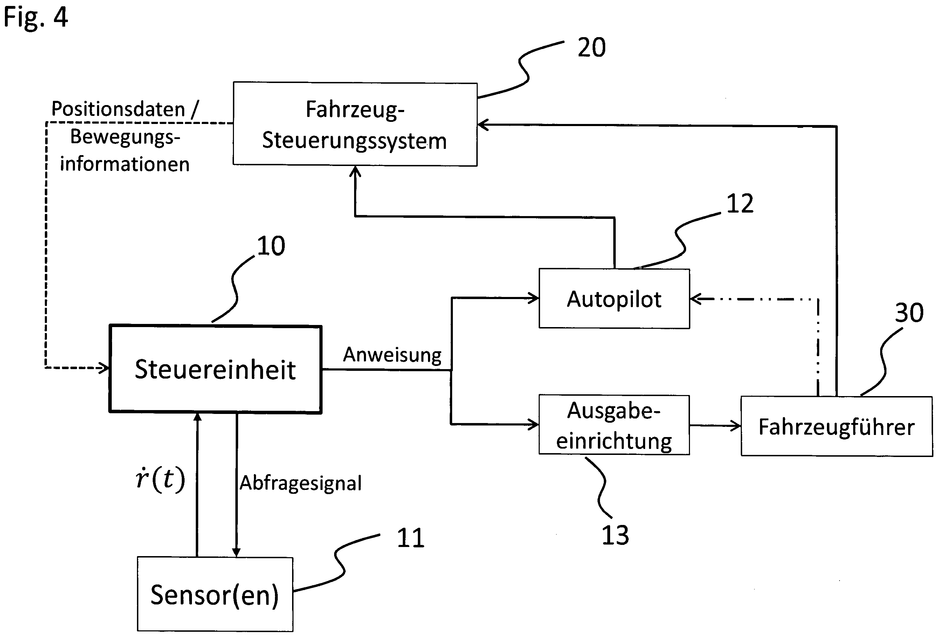

In Fig. 4 ist eine Übersicht des Zusammenwirkens der Steuereinheit 10 mit den Komponenten des Fahrzeugs dargestellt. Dabei wird die Interaktion zu einem oder mehreren Sensoren 11 dargestellt, wobei die Steuereinheit 10 diese Informationen abfragen, empfangen und zur weiteren Verarbeitung speichern kann. Die zusätzlichen Informationen wie z.B. Bewegungsinformationen, Positionsdaten, Abfragesignal, Anweisung, $\dot{r}(t)$ geben eine Auszug der wichtigsten Informationsflüsse dar. Weitere dem Fachmann bekannte Informationen, sowie Informationsangaben für spezielle Ausführungsformen, wurden zur besseren Lesbarkeit in der Darstellung weggelassen.

Zudem ist die Steuereinheit 10 eingerichtet eine Anweisung an einen Autopiloten 12 und / oder einen Fahrzeugführer 30 zur Ausführung eines Messmanövers des mit der Steuereinrichtung ausgestatteten Fahrzeugs auszugeben. Dabei kann die Ausführung durch den Fahrzeugführer 30 direkt oder über den Autopiloten 12 erfolgen, wobei der Fahrzeugführer 30 die Verwendung des Autopiloten bestimmt und steuert - dies wird durch die gestrichelte Linie in Fig. 4 dargestellt.

Nach Feststellung der vollständigen Ausführung des Messmanövers, die die Steuereinheit 10 anhand der Änderung der Bewegungsinformationen bzw. Positionsdaten des Fahrzeug-Steuerungssystem 20 bestimmt, kann anschließend ein erneutes Abfragen der Annäherungsrate $\dot{r}_1$ (entsprechend $\dot{r}(t_1)$) zwischen den beiden Fahrzeugen und Empfangen der Sensordaten erfolgen.

Die Annäherungsraten $\dot{r}_0$, $\dot{r}_1$ können anschließend von der Steuereinheit 10 verglichen werden und es kann anschließend eine Ausweichempfehlung an einen Autopiloten 12 und / oder einen Fahrzeugführer 30 zur Durchführung eines Ausweichmanövers erfolgen. Dabei erfolgt bei

$\dot{r}_1 > \dot{r}_0$ das Ausweichmanöver in dieselbe Drehrichtung wie beim Messmanöver,

$\dot{r}_1 < \dot{r}_0$ das Ausweichmanöver entgegen der Drehrichtung des Messmanövers,

im Fall von $\dot{r}_1 \cong \dot{r}_0$ gibt die Steuereinheit 10 eine Anweisung zur Ausführung eines weiteren Messmanövers in die entgegengesetzte Drehrichtung mit einem größeren Betrag der Richtungsänderung als beim vorhergehenden Messmanöver aus.

Die elektronische Steuereinheit 10 weist Schnittstellen zu einem oder mehreren Sensoren 11, Fahrzeugsteuerungssystem 20, dies ist z.B. das Flight-Control System eines Luftfahrzeugs, sowie zum Autopilot 12 / Fahrzeugführer 30 auf, wobei die Ausgabe zum Fahrzeugführer 30 vorteilhaft über eine Ausgabeeinrichtung 13 (wie in Fig. 4 dargestellt) erfolgen kann. Die Ausgabeeinrichtung 13 kann die Ausweichempfehlung an den Fahrzeugführer visuell und / oder akustisch erzeugen.

Für die Feststellung der Durchführung des Messmanövers ist, empfängt die Steuereinheit 10 Bewegungsinformationen / Positionsdaten vom Fahrzeugsteuerungssystem 20 (zur Identifikation der Kursänderung), die vorteilhaft über eine entsprechende Schnittstelle an der Steuereinheit 10 eingehen können. Für eine Feststellung einer Geschwindigkeitsänderung durch das Messmanöver, ist die Steuereinheit zum Erfassen, Speichern und Auswerten der Geschwindigkeitsinformationen hinsichtlich des Betrags dieser eingerichtet, wobei in einer vorteilhaften Ausführung die Differenzgeschwindigkeit bestimmt werden kann.

In einer weiteren vorteilhaften Ausführung können weitere Informationen oder Signale empfangen werden, dabei werden vom Fahrzeug zur Initiierung des Verfahrens Informationen aus ADS-B, AIS, TCAS oder zu anderen Formen von Transponder oder Receiver Systemen gewonnen.

Vorteilhaft weist das System für diese Informationen eine zusätzliche Schnittstelle auf, sofern keine bestehende Schnittstelle genutzt werden kann wie z.B. die des Sensors(en) 11 oder Fahrzeugsteuerungssystems 20.

In einer weiteren Ausführungsform weist die Steuereinheit 10 eine Echtzeit-Funktionalität auf, so dass die entsprechende Signalverarbeitung und Ausgabe der Informationen nahezu ohne Verzögerung erfolgt.

**Patentansprüche**

1. Verfahren zum Bestimmen einer Ausweichempfehlung für ein erstes Fahrzeug (A) bei der Begegnung mit einem zweiten, nicht-kooperativen Fahrzeug (B), wobei sich Fahrzeug (B) mit konstanter Geschwindigkeit bewegt, wobei das erste und das zweite Fahrzeug ein Luftfahrzeug, ein Raumfahrzeug, ein Seefahrzeug oder ein Unterseefahrzeug ist, und wobei das Verfahren die folgenden Schritte aufweist:

- Messen der Annäherungsrate $\dot{r}_0$ zwischen den beiden Fahrzeugen (A, B) mittels eines Sensors an Bord des ersten Fahrzeugs (A),
- Durchführen eines Messmanövers des ersten Fahrzeug (A), wobei eine Richtungsänderung des ersten Fahrzeugs (A) erfolgt,
- Erneutes Messen der Annäherungsrate $\dot{r}_1$ zwischen den beiden Fahrzeugen (A, B) nach Durchführung der Richtungsänderung, **dadurch gekennzeichnet, dass** das Verfahren ferner die folgenden Schritte aufweist
- Vergleichen der Annäherungsraten $\dot{r}_0$ und $\dot{r}_1$ mittels einer elektronischen Verarbeitungseinheit an Bord des ersten Fahrzeugs (A), sowie
- Ausgeben einer Empfehlung zur Durchführung eines Ausweichmanövers für das erste Fahrzeug (A), wobei

bei $\dot{r}_1 > \dot{r}_0$ das Ausweichmanöver in dieselbe Drehrichtung wie beim Messmanöver erfolgen soll, bei $\dot{r}_1 < \dot{r}_0$ das Ausweichmanöver entgegen der Drehrichtung des Messmanövers erfolgen soll und bei $\dot{r}_1 = \dot{r}_0$ ein weiteres Messmanöver in die entgegengesetzte Drehrichtung mit einem größeren Betrag der Richtungsänderung als beim vorhergehenden Messmanöver durchgeführt wird.

2. Verfahren nach einem der vorangehenden Ansprüche, **dadurch gekennzeichnet, dass** als Sensor ein Radar-, Sonar- oder ein Lasersensor verwendet wird.

3. Verfahren nach einem der vorangehenden Ansprüche, **dadurch gekennzeichnet, dass** die Empfehlung zur Durchführung eines Ausweichmanövers in Echtzeit ausgegeben wird.

4. Verfahren nach einem der vorangehenden Ansprüche **dadurch gekennzeichnet, dass** die Richtungsänderung des Messmanövers in eine beliebige Fahrtrichtung erfolgen kann, wobei der Betrag der Geschwindigkeit des ersten Fahrzeugs beibehalten wird.

5. Verfahren nach einem der vorangehenden Ansprüche **dadurch gekennzeichnet, dass** die Ausführung des Verfahrens nach Unterschreiten eines vordefinierten Schwellwertes für mindestens eine der folgenden Größen initiiert wird:

   - Passierabstand, dem sogenannten Closest Approach CA entsprechend dem Abstand am zu erwartenden Ort der dichtesten Annäherung dem sogenannten CPA der zwei Fahrzeuge (A, B),
   - Zeitdauer bis zum Ort der dichtesten Annäherung, der sogenannten Time to Closest Point of Approach TCPA,
   - Kollisionsrisiko.

6. Verfahren nach Anspruch 5, **dadurch gekennzeichnet, dass** die Berechnung des Kollisionsrisikos aus der Kombination von TCPA und CPA und/oder absoluten Distanz bestimmt wird.

7. Verfahren nach einem der vorangehenden Ansprüche, **dadurch gekennzeichnet, dass** für die Entscheidung über die Initiierung des Verfahrens die Informationen eines oder mehrerer der folgenden Systeme genutzt wird: AIS, ADS-B, TCAS oder andere Formen von Transponder / Receiver Systemen.

8. Verfahren nach einem der vorangehenden Ansprüche, **dadurch gekennzeichnet, dass** zur Erhöhung der Zuverlässigkeit der Ausweichempfehlung beim Vergleich der Annäherungsraten $\dot{r}_0$ und $\dot{r}_1$ ein Korrekturwert eingeführt wird, der die Geometrie des Messmanöver berücksichtigt.

9. Verfahren nach einem der vorangehenden Ansprüche, **dadurch gekennzeichnet, dass** die Ausgabe der Ausweichempfehlung auf einem Display, HUD oder Helmsichtgerät erfolgt.

10. Verfahren nach einem der vorangehenden Ansprüche, **dadurch gekennzeichnet, dass** die Ausgabe der Ausweichempfehlung mit akustischen Mitteln erfolgt.

11. Verfahren zum Bestimmen einer Ausweichempfehlung für ein erstes Fahrzeug (A) bei der Begegnung mit einem zweiten, nicht-kooperativen Fahrzeug (B), wobei sich das zweite Fahrzeug mit einer konstanten Geschwindigkeit bewegt, wobei das erste und das zweite Fahrzeug ein Luftfahrzeug, ein Raumfahrzeug, ein Seefahrzeug oder ein Unterseefahrzeug ist, und wobei das Verfahren die folgenden Schritte aufweist:

   - Messen der Annäherungsrate $\dot{r}_0$ zwischen den beiden Fahrzeugen mittels eines Sensors an Bord des ersten Fahrzeugs (A),
   - Erfassen und speichern des Betrags der Geschwindigkeit $|\vec{v}_{A,0}|$ des ersten Fahrzeugs (A) zum Zeitpunkt der Messung von $\dot{r}_0$,
   - Durchführen eines Messmanövers des ersten Fahrzeugs (A), wobei eine Richtungsänderung des ersten Fahrzeugs (A) erfolgt,
   - Erneutes Messen der Annäherungsrate $\dot{r}_1$ zwischen den beiden Fahrzeugen nach Durchführung der Richtungsänderung, sowie erfassen und speichern des Betrags der Geschwindigkeit $|\vec{v}_{A,1}|$ des ersten Fahrzeugs (A) zum Zeitpunkt der Messung von $\dot{r}_1$,
   - Bestimmen der Differenzgeschwindigkeit $\Delta v_{A,0} = |\vec{v}_{A,1}| - |\vec{v}_{A,0}|$ des ersten Fahrzeugs, **dadurch ge-**

**kennzeichnet, dass** das Verfahren ferner die folgenden Schritte aufweist

- Vergleichen der Annäherungsraten $\dot{r}_0$ und $\dot{r}_1$ mittels einer elektroniso Verarbeitungseinheit an Bord des ersten Fahrzeugs (A), sowie
- Ausgeben einer Empfehlung zur Durchführung eines Ausweichmanövers für das erste Fahrzeug (A), wobei bei $\Delta v_{A,0} < 0$:

für $\dot{r}_1 > \dot{r}_0 - \Delta v_{A,0}$ das Ausweichmanöver in dieselbe Drehrichtung wie beim Messmanöver erfolgen soll,
bei $\dot{r}_1 < \dot{r}_0$ das Ausweichmanöver entgegen der Drehrichtung des Messmanövers erfolgen soll und
bei $0 < \dot{r}_1 - \dot{r}_0 < \Delta v_0$ ein weiteres Messmanöver in die entgegengesetzte Drehrichtung mit einem größeren Betrag der Richtungsänderung als beim vorhergehenden Messmanöver durchgeführt werden soll.

- Im Fall von $\Delta v_{A,0} > 0$: für

$\dot{r}_1 > \dot{r}_0$ das Ausweichmanöver in dieselbe Drehrichtung wie beim Messmanöver erfolgen soll,
bei $\dot{r}_1 < \dot{r}_0 - \Delta v_0$ das Ausweichmanöver entgegen der Drehrichtung des Messmanövers erfolgen soll und
bei $0 > \dot{r}_1 - \dot{r}_0 > -\Delta v_0$ ein weiteres Messmanöver in die entgegengesetzte Drehrichtung mit einem größeren Betrag der Richtungsänderung als beim vorhergehenden Messmanöver durchgeführt werden soll.

**12.** Elektronische Steuereinrichtung, vorgesehen zum Einsatz in einem Fahrzeug, zur Implementierung des Verfahrens nach einem der vorangehenden Ansprüche, **derart eingerichtet, dass** es

- Eingangssignale von einem oder mehreren Sensoren an Bord des mit der Steuereinheit ausgestatteten ersten Fahrzeugs zur Bestimmung der aktuellen Annäherungsrate $\dot{r}_0$ zwischen den beiden Fahrzeugen abfragen, empfangen und speichern kann,
- eine Anweisung an einen Autopiloten und / oder einen Fahrzeugführer des ersten Fahrzeugs zur Ausführung eines Messmanövers des ersten Fahrzeugs erzeugen kann,
- eine Feststellung der vollständigen Ausführung des Messmanövers anhand der Bewegungsinformationen / Positionsdaten des ersten Fahrzeugs vornehmen kann, und danach ein erneutes Abfragen der Annäherungsrate $\dot{r}_1$ zwischen den beiden Fahrzeugen und den Empfang der Sensordaten vornehmen kann,
- einen Vergleich der Annäherungsraten $\dot{r}_0$, $\dot{r}_1$ vornehmen kann,
- eine Ausweichempfehlung an den Autopiloten und / oder den Fahrzeugführer des ersten Fahrzeugs zur Durchführung eines Ausweichmanövers erzeugen kann, wobei bei $\dot{r}_1 > \dot{r}_0$ das Ausweichmanöver in dieselbe Drehrichtung wie beim Messmanöver erfolgen soll, bei $\dot{r}_1 < \dot{r}_0$ das Ausweichmanöver entgegen der Drehrichtung des Messmanövers erfolgen soll,
- im Fall von $\dot{r}_1 = \dot{r}_0$ eine Anweisung zur Ausführung eines weiteren Messmanövers in die entgegengesetzte Drehrichtung mit einem größeren Betrag der Richtungsänderung als beim vorhergehenden Messmanöver erzeugen kann.

**13.** Steuereinrichtung nach Anspruch 12 **dadurch gekennzeichnet, dass** es eingerichtet ist, eine Verarbeitung der Eingangssignale der Sensoren erst nach Vorliegen einer Unterschreitung eines Schwellwertes oder auf Grund eines Kollisionsrisikos vorzunehmen.

**14.** Steuereinrichtung nach Anspruch 13, **dadurch gekennzeichnet, dass** es eine Schnittstelle zu einem AIS, ADS-B, TCAS oder zu anderen Formen von Transponder / Receiver Systemen aufweist.

**15.** Steuereinrichtung nach einem der Ansprüche 12 bis 14 **dadurch gekennzeichnet, dass** es eine Echtzeit-Funktionalität aufweist.

**Claims**

**1.** Method for determining an evasion recommendation for a first vehicle (A) upon encountering a second, uncooperative vehicle (B), wherein vehicle (B) is moving at a constant speed, wherein the first and second vehicles are an aircraft, a spacecraft, a vessel or an underwater vehicle, and wherein the method has the following steps of:

- measuring the approach rate $\dot{r}_0$ between the two vehicles (A, B) by means of a sensor on board the first vehicle (A),
- carrying out a measuring manoeuvre of the first vehicle (A), wherein a direction of the first vehicle (A) is changed,

- measuring the approach rate $\dot{r}_1$ between the two vehicles (A, B) again after the direction has been changed,

**characterized in that** the method also has the following steps of

- comparing the approach rates $\dot{r}_0$ and $\dot{r}_1$ by means of an electronic processing unit on board the first vehicle (A), and
- outputting a recommendation to carry out an evasion manoeuvre for the first vehicle (A), wherein, in the case of $\dot{r}_1 > \dot{r}_0$, the evasion manoeuvre is intended to be carried out in the same direction of rotation as in the measuring manoeuvre, in the case of $\dot{r}_1 < \dot{r}_0$, the evasion manoeuvre is intended to be carried out counter to the direction of rotation of the measuring manoeuvre, and, in the case of $\dot{r}_1 = \dot{r}_0$, a further measuring manoeuvre is carried out in the opposite direction of rotation with a greater magnitude of the direction change than in the preceding measuring manoeuvre.

2. Method according to one of the preceding claims, **characterized in that** a radar sensor, a sonar sensor or a laser sensor is used as the sensor.

3. Method according to one of the preceding claims, **characterized in that** the recommendation to carry out an evasion manoeuvre is output in real time.

4. Method according to one of the preceding claims, **characterized in that** the direction of the measuring manoeuvre can be changed in any desired direction of travel, wherein the absolute value of the speed of the first vehicle is retained.

5. Method according to one of the preceding claims, **characterized in that** the performance of the method is initiated for at least one of the following variables after a predefined threshold value has been undershot:

   - passing distance, the so-called closest approach CA, corresponding to the distance at the expected closest point of approach, the so-called CPA, of the two vehicles (A, B),
   - time to the closest point of approach TCPA,
   - collision risk.

6. Method according to Claim 5, **characterized in that** the calculation of the collision risk is determined from the combination of the TCPA and CPA and/or absolute distance.

7. Method according to one of the preceding claims, **characterized in that** the information from one or more of the following systems is used for the decision relating to the initiation of the method: AIS, ADS-B, TCAS or other forms of transponder/receiver systems.

8. Method according to one of the preceding claims, **characterized in that,** in order to increase the reliability of the evasion recommendation, a correction value is introduced when comparing the approach rates $\dot{r}_0$ and $\dot{r}_1$, which correction value takes into account the geometry of the measuring manoeuvre.

9. Method according to one of the preceding claims, **characterized in that** the evasion recommendation is output on a display, a HUD or a helmet display device.

10. Method according to one of the preceding claims, **characterized in that** the evasion recommendation is output using acoustic means.

11. Method for determining an evasion recommendation for a first vehicle (A) upon encountering a second, uncooperative vehicle (B), wherein the second vehicle is moving at a constant speed, wherein the first and second vehicles are an aircraft, a spacecraft, a vessel or an underwater vehicle, and wherein the method has the following steps of:

    - measuring the approach rate $\dot{r}_0$ between the two vehicles by means of a sensor on board the first vehicle (A),
    - capturing and storing the absolute value of the speed $\left|\vec{v}_{A,0}\right|$ of the first vehicle (A) at the time at which $\dot{r}_0$ is measured,
    - carrying out a measuring manoeuvre of the first vehicle (A), wherein a direction of the first vehicle (A) is changed,

    - measuring the approach rate $\dot{r}_1$ between the two vehicles again after the direction has been changed, and capturing and storing the absolute value of the speed $\left|\vec{v}_{A,1}\right|$ of the first vehicle (A) at the time at which $\dot{r}_1$ is measured,

- determining the differential speed $\Delta v_{A,0} = \left|\vec{v}_{A,1}\right| - \left|\vec{v}_{A,0}\right|$ of the first vehicle,

**characterized in that** the method also has the following steps of

- comparing the approach rates $\dot{r}_0$ and $\dot{r}_1$ by means of an electronic processing unit on board the first vehicle (A), and
- outputting a recommendation to carry out an evasion manoeuvre for the first vehicle (A), wherein, in the case of $\Delta v_{A,0} < 0$:

for $\dot{r}_1 > \dot{r}_0 - \Delta v_{A,0}$, the evasion manoeuvre is intended to be carried out in the same direction of rotation as in the measuring manoeuvre,
for $\dot{r}_1 < \dot{r}_0$, the evasion manoeuvre is intended to be carried out counter to the direction of rotation of the measuring manoeuvre, and
in the case of $0 < \dot{r}_1 - \dot{r}_0 < -\Delta v_0$, a further measuring manoeuvre is intended to be carried out in the opposite direction of rotation with a greater magnitude of the direction change than in the preceding measuring manoeuvre,

- in the case of $\Delta v_{A,0} > 0$:

for $\dot{r}_1 > \dot{r}_0$, the evasion manoeuvre is intended to be carried out in the same direction of rotation as in the measuring manoeuvre, in the case of $\dot{r}_1 < \dot{r}_0 - \Delta v_0$, the evasion manoeuvre is intended to be carried out counter to the direction of rotation of the measuring manoeuvre, and
in the case of $0 > \dot{r}_1 - \dot{r}_0 > \Delta v_0$, a further measuring manoeuvre is intended to be carried out in the opposite direction of rotation with a greater magnitude of the direction change than in the preceding measuring manoeuvre.

12. Electronic control device, provided for use in a vehicle, for implementing the method according to one of the preceding claims, **set up in such a manner that** it

- can request, receive and store input signals from one or more sensors on board the first vehicle equipped with the control unit for the purpose of determining the current approach rate $\dot{r}_0$ between the two vehicles,
- can generate an instruction for an autopilot and/or a vehicle driver of the first vehicle to carry out a measuring manoeuvre of the first vehicle,
- can determine that the measuring manoeuvre has been completely carried out on the basis of the movement information/position data relating to the first vehicle, and can then request the approach rate $\dot{r}_1$ between the two vehicles again and can receive the sensor data,
- can compare the approach rates $\dot{r}_0$, $\dot{r}_1$,
- can generate an evasion recommendation for the autopilot and/or the vehicle driver of the first vehicle to carry out an evasion manoeuvre, wherein, in the case of $\dot{r}_1 > \dot{r}_0$, the evasion manoeuvre is intended to be carried out in the same direction of rotation as in the measuring manoeuvre, and, in the case of $\dot{r}_1 < \dot{r}_0$, the evasion manoeuvre is intended to be carried out counter to the direction of rotation of the measuring manoeuvre,
- in the case of $\dot{r}_1 = \dot{r}_0$, can generate an instruction to carry out a further measuring manoeuvre in the opposite direction of rotation with a greater magnitude of the direction change than in the preceding measuring manoeuvre.

13. Control device according to Claim 12, **characterized in that** it is set up to process the input signals from the sensors only after a threshold value has been undershot or on the basis of a collision risk.

14. Control device according to Claim 13, **characterized in that** it has an interface to an AIS, ADS-B, TCAS or to other forms of transponder/receiver systems.

15. Control device according to one of Claims 12 to 14, **characterized in that** it has real-time functionality.

**Revendications**

1. Procédé de détermination d'une recommandation de manoeuvre d'évitement pour un premier véhicule (A) lors de sa rencontre avec un deuxième véhicule (B) non coopératif, dans lequel le véhicule (B) se déplace à une vitesse constante, dans lequel les premier et deuxième véhicules sont un véhicule aérien, un véhicule spatial, un véhicule marin ou un véhicule sous-marin, et dans lequel le procédé comprend les étapes consistant à :

   - mesurer la vitesse de rapprochement $\dot{r}_0$ entre les deux véhicules (A, B) au moyen d'un capteur embarqué sur le premier véhicule (A),
   - exécuter une manoeuvre de mesure sur le premier véhicule (A) lors de laquelle une modification de direction du premier véhicule (A) est effectuée,
   - mesurer à nouveau la vitesse de rapprochement $\dot{r}_1$ entre les deux véhicules (A, B) après exécution de la modification de direction, **caractérisé en ce que** le procédé comporte en outre les étapes consistant à :

      - comparer les vitesses de rapprochement $\dot{r}_0$ et $\dot{r}_1$ au moyen d'une unité de traitement électronique embarquée sur le premier véhicule (A), et
      - délivrer une recommandation pour l'exécution d'une manoeuvre d'évitement pour le premier véhicule (A), dans lequel, lorsque $\dot{r}_1 > \dot{r}_0$, la manoeuvre d'évitement doit être effectuée dans la même direction que lors de la manoeuvre de mesure, lorsque $\dot{r}_1 < \dot{r}_0$, la manoeuvre d'évitement doit être effectuée en sens opposé à la direction de rotation de la manoeuvre de mesure et lorsque $\dot{r}_1 = \dot{r}_0$, une manoeuvre de mesure supplémentaire est exécutée dans la direction de rotation opposée avec une valeur plus élevée de la modification de direction que lors de la manoeuvre de mesure précédente.

2. Procédé selon l'une des revendications précédentes, **caractérisé en ce qu'**un capteur radar, sonar ou laser est utilisé en tant que capteur.

3. Procédé selon l'une des revendications précédentes, **caractérisé en ce que** la recommandation d'exécution d'une manoeuvre d'évitement est délivrée en temps réel.

4. Procédé selon l'une des revendications précédentes, **caractérisé en ce que** la modification de direction de la manoeuvre de mesure peut s'effectuer dans une direction de déplacement quelconque, dans lequel la valeur de la vitesse du premier véhicule est conservée.

5. Procédé selon l'une des revendications précédentes, **caractérisé en ce que** la mise en oeuvre du procédé est déclenchée après que l'une des grandeurs suivantes s'est abaissée en dessous une valeur de seuil prédéfinie :

   - distance de passage, c'est-à-dire la distance dite de Rapprochement Maximal, CA, correspondant à la distance du point dit de Point Rapprochement Maximal, CPA, des deux véhicules (A, B),
   - temps restant jusqu'au point de rapprochement maximal, dit Temps jusqu'au Point de Rapprochement Maximal, TCPA,
   - risque de collision.

6. Procédé selon la revendication 5, **caractérisé en ce que** le calcul du risque de collision est déterminé à partir d'une combinaison du TCPA et du CPA et/ou de la distance absolue.

7. Procédé selon l'une des revendications précédentes, **caractérisé en ce que**, pour la décision concernant le déclenchement du procédé, les informations d'un ou plusieurs des systèmes suivants sont utilisées : AIS, ADS-B, TCAS ou d'autres formes de systèmes de transpondeurs/récepteurs.

8. Procédé selon l'une des revendications précédentes, **caractérisé en ce que**, pour augmenter la fiabilité de la recommandation de manoeuvres d'évitement, une valeur de correction tenant compte de la géométrie de la manoeuvre de mesure est prise en compte lors de la comparaison des vitesses de rapprochement $\dot{r}_0$ et $\dot{r}_1$.

9. Procédé selon l'une des revendications précédentes, **caractérisé en ce que** la délivrance de la recommandation de manoeuvre d'évitement est effectuée sur un afficheur, un dispositif d'affichage HUD ou un appareil de vision de casque.

10. Procédé selon l'une des revendications précédentes, **caractérisé en ce que** la délivrance de la recommandation de manoeuvre d'évitement est effectuée à l'aide de moyens acoustiques.

**11.** Procédé de détermination d'une recommandation de manoeuvre d'évitement pour un premier véhicule (A) lors de sa rencontre avec un deuxième véhicule (B) non coopératif, dans lequel le deuxième véhicule se déplace à une vitesse constante, dans lequel les premier et deuxième véhicules sont un véhicule aérien, un véhicule spatial, un véhicule marin ou un véhicule sous-marin, et
dans lequel le procédé comprend les étapes consistant à :

- mesurer la vitesse de rapprochement $\dot{r}_0$ entre les deux véhicules au moyen d'un capteur embarqué sur le premier véhicule (A),
- détecter et stocker la valeur de la vitesse $|\vec{v}_{A,0}|$ du premier véhicule (A) à l'instant où $\dot{r}_0$ est mesuré,
- exécuter une manoeuvre de mesure sur le premier véhicule (A), lors de laquelle une modification de la direction du premier véhicule (A) est effectuée,
- mesurer à nouveau la vitesse de rapprochement $\dot{r}_1$ entre les deux véhicules après exécution de la modification de direction, et détecter et stocker la valeur de la vitesse $|\vec{v}_{A,1}|$ du premier véhicule (A) à l'instant de la mesure de $\dot{r}_1$,
- déterminer la vitesse différentielle $\Box v_{A,0} = |\vec{v}_{A,1}| - |\vec{v}_{A,0}|$ du premier véhicule, **caractérisé en ce que** le procédé comporte en outre les étapes consistant à :
- comparer les vitesses de rapprochement $\dot{r}_0$ et $\dot{r}_1$ au moyen d'une unité de traitement électronique embarquée sur le premier véhicule (A), et
- délivrer une recommandation pour l'exécution d'une manoeuvre d'évitement pour le premier véhicule (A), dans lequel, lorsque $\Box v_{A,0} < 0$ :

pour $\dot{r}_1 > \dot{r}_0 - \Box v_{A,0}$, la manoeuvre d'évitement doit être effectuée dans la même direction de rotation que lors de la manoeuvre de mesure,
lorsque $\dot{r}_1 < \dot{r}_0$, la manoeuvre d'évitement doit être effectuée en sens opposé à la direction de rotation de la manoeuvre de mesure, et
lorsque $0 < \dot{r}_1 - \dot{r}_0 < -\Box v_0$, une manoeuvre de mesure supplémentaire doit être effectuée dans la direction de rotation opposée avec une valeur plus élevée de la modification de direction que lors de la manoeuvre de mesure précédente,

- dans le cas où $\Box v_{A,0} > 0$ :

pour $\dot{r}_1 > \dot{r}_0$, la manoeuvre d'évitement doit être effectuée dans la même direction de rotation que lors de la manoeuvre de mesure,
lorsque $\dot{r}_1 < \dot{r}_0 - \Box v_{A,0}$, la manoeuvre d'évitement doit être effectuée en sens opposé à la direction de rotation de la manoeuvre de mesure, et
lorsque $0 > \dot{r}_1 - \dot{r}_0 > -\Box v_0$, une manoeuvre de mesure supplémentaire doit être effectuée dans la direction de rotation opposée avec une valeur plus élevée de la modification de direction que lors de la manoeuvre de mesure précédente.

**12.** Dispositif de commande électronique, prévu pour une utilisation dans un véhicule pour mettre en oeuvre le procédé selon l'une des revendications précédentes, conçu pour

- pouvoir acquérir, recevoir et stocker des signaux d'entrée provenant d'un ou plusieurs capteurs embarqués sur le premier véhicule équipé de ladite unité de commande pour déterminer la vitesse de rapprochement $\dot{r}_0$ actuelle entre les deux véhicules,
- pouvoir générer une instruction destinée à un pilote automatique et/ou à un conducteur de véhicule du premier véhicule pour exécuter une manoeuvre de mesure sur le premier véhicule,
- pouvoir établir si la manoeuvre de mesure a été entièrement exécutée sur la base des informations de mouvement/des données de position du premier véhicule, et pouvoir ensuite effectuer une nouvelle acquisition de la vitesse de rapprochement $\dot{r}_1$ entre les deux véhicules et recevoir les données de capteur,
- pouvoir effectuer une comparaison des vitesses de rapprochement $\dot{r}_0$, $\dot{r}_1$,
- pouvoir générer une recommandation de manoeuvre d'évitement pour le pilote automatique et/ou le conducteur de véhicule du premier véhicule afin d'exécuter une manoeuvre d'évitement, dans lequel, lorsque $\dot{r}_1 > \dot{r}_0$, *la manoeuvre d'évitement doit être effectuée dans la même direction de rotation que lors de la manoeuvre de mesure, lorsque $\dot{r}_1 < \dot{r}_0$, la manoeuvre d'évitement doit être effectuée en sens opposé à la direction de rotation de la manoeuvre de mesure,*

- dans le cas où $\dot{r}_1 = \dot{r}_0$, pouvoir générer une instruction destinée à exécuter une autre manoeuvre de mesure dans une direction de rotation opposée avec une valeur plus importante de la modification de direction que lors de la manoeuvre de mesure précédente.

13. Dispositif de commande selon la revendication 12, **caractérisé en ce qu'**il est conçu pour effectuer un traitement des signaux d'entrée des capteurs dès qu'une valeur de seuil a été franchie en sens décroissant ou sur la base d'un risque de collision.

14. Dispositif de commande selon la revendication 13, **caractérisé en ce qu'**il comporte une interface avec un système AIS, ADS-B, TCAS ou d'autres formes de systèmes de transpondeurs/récepteurs.

15. Dispositif de commande selon l'une des revendications 12 à 14, **caractérisé en ce qu'**il peut fonctionner en temps réel.

Fig. 1

Fig. 2

$t_0$:

$t_1$:

$B(t_0)$

$B(t_1)$

$\dot{r}_1$

$r_1$

F_B

$\alpha$

F_A

$A(t_0)$

F_A1

$A(t_1)$

B

$\dot{r}_0$

$r_0$

F_B

F_A

A

Fig. 3

$B(t_0)$  $B(t_1)$  $B(t_2)$

F_B

$\dot{r}_0$  $\dot{r}_1$  $\dot{r}_2$

$r_0$  $r_1$  $r_2$

F_A2

$A(t_2)$

α1  α2

$A(t_1)$

F_A1

F_A

$A(t_0)$

EP 3 159 868 B1

Fig. 4

Positionsdaten / Bewegungs-informationen

Fahrzeug-Steuerungssystem    20

Steuereinheit    10

$\dot{r}(t)$    Abfragesignal

Sensor(en)    11

Anweisung

Autopilot    12

Ausgabe-einrichtung    13

Fahrzeugführer    30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8831906 B1
- EP 2674723 A2

- US 20120209457 A